# EUROPEAN PATENT SPECIFICATION

(11) **EP 2 846 590 B1**
(45) Date of publication and mention of the grant of the patent: **19.04.2017**
(21) Application number: 13306239.8
(22) Date of filing: 10.09.2013
(51) Int. Cl.: H04W 52/02

(54) **Energy saving**
Energieeinsparung
Économie d'énergie

(43) Date of publication of application: 11.03.2015
(73) Proprietor: ALCATEL LUCENT, 92100 Boulogne-Billancourt (FR)
(72) Inventor: Brend, Graham, Swindon, Wiltshire SN5 7DJ (GB)
(74) Representative: Berthier, Karine

(56) References cited:
- WO-A1-2013/091249
- US-A1- 2010 240 371

## Description

### FIELD OF THE INVENTION

The present invention relates to a method of implementing energy saving in a small cell wireless telecommunication network deployment, a computer program product and network control node operable to perform that method. The network deployment comprises at least one energy saving small cell switchable between: an active state in which it is configured to support a region of radio coverage and a dormant state in which it does not support the region of radio coverage.

### BACKGROUND

Wireless telecommunications systems are known. In such systems, mobile network communication devices (for example, mobile telephones and tablets) are operable to communicate with base stations provided by network providers.

In known wireless telecommunications systems, radio coverage is provided to network connectible devices within areas known as cells. Abase station is typically located in each cell to provide radio coverage. Network connectible devices in each cell are typically operable to receive information and data from a base station and to transmit information and data to a base station.

Network connectible devices roam through the wireless communications system. Base stations are provided which support the cells of radio coverage. A number of such base stations are provided and they are distributed geographically in order to provide a wide area of coverage to user equipment.

When network connectible devices are within an area served by a base station, communications may be established between the user equipment and the base station over associated radio links. Each base station typically supports a number of sectors within a geographical area of service. Typically, a different antenna within a base station supports each associated sector and each base station may have multiple antennas.

Traditional base stations provide coverage in relatively large geographical areas and those regions of radio coverage or cells are often referred to as macro cells. It is possible to provide a network in which smaller sized cells are provided within macro cells. Such smaller sized cells are sometimes referred to as micro cells, metro cells, pico cells or femto cells. One way to establish a small cell is to provide a small cell base station, also known as a low power node, which can provide radio coverage having a relatively limited range within the extensive coverage area of a macro cell.

The transmission power of a small cell base station is relatively low and, as a result, each small cell provides a small coverage area in comparison to that provided by the macro cell. Small cell base stations may be used, for example, to provide coverage in a network hotspot or to create a small cell network within an office or a home.

Small cells can typically be provided where communications coverage provided by a macro cell is poor, or where a user wishes to use an alternative communications link provided locally by a small cell base station to communicate with a core network. Small cells can also be provided to increase capacity within a network.

Although the deployment of small cell base stations can provide advantages, unexpected consequences can occur. Accordingly, it is desired to provide an improved network suited to the inclusion of small cell base stations.

CN102065448 describes a method for energy saving in a wireless network wherein a compensation cell is assigned to provide radio coverage when an energy saving cell is in a dormant state.

WO2013/091249 describes a method for ranking cells within a group of cells in a cellular network. Based on the "importance" of a cell, a network node may keep that cell active or switch off the cell, thereby saving power. A radio network node may serve a first cell in a group of cells. The network node receives power level measurements from one or more user equipment. The power level measurements indicate a received power level in at least one cell of the group of cells where that user equipment is active. The network node is operable to rank the importance of the cells in the group of cells, based on power level measurements and the number of user equipment indicating that a cell has the highest received power level measurement.

US 2010/0240371 describes a method for selecting and handing over a mobile communication device from a first cell to a second cell in a cellular wireless communication system, based on determining whether the signal quality level of a second cell meets or exceeds a signal quality threshold.

### SUMMARY

Accordingly, a first aspect provides: a method of implementing energy saving in a small cell wireless telecommunication network deployment comprising at least one energy saving small cell switchable between: an active state in which it is configured to support a region of radio coverage; and a dormant state in which it does not support said region of radio coverage; the method comprising: assigning a compensation ranking to at least one other small cell in a determined small cell network deployment based on at least one operational characteristic indicative of an ability of the at least one other small cell to provide radio coverage in the region of radio coverage supported by the energy saving small cell; determining whether the energy saving small cell is in the dormant state; and, if so, triggering at least one other small cell to provide radio coverage in the region of radio coverage, based on the assigned compensation ranking.

The first aspect recognises that one of the key issues facing wireless network deployments is the need to conserve energy whilst at the same time also providing widespread wireless coverage to mobile users utilising network connectible devices. One of the elements in a wireless base station of any size which consumes the most power is the Power Amplifier (PA). It will be appreciated that significant energy savings might be achieved if base stations within a network were operable to shut off their transmitters including the Power Amplifier when it is determined that there is limited or no traffic in their coverage areas. That is to say, in such a situation a base station may operate to effectively become dormant.

The first aspect recognises that a significant and ever increasing number of small cell base stations are being deployed within networks and although such low power nodes consume significantly less power than a macro base station, and the actual energy savings that would be realised by allowing any one small cell base station to enter a dormant mode might be low, the total energy saving across a multitude of low power nodes deployed within a network could be significant.

Aspects and embodiments recognise that it could be beneficial to provide an energy saving solution within a radio access network, be it an LTE network or UMTS network, that energy saving solution including the operation of low power nodes which support small cells known as, for example, femto or pico cells.

Aspects and embodiments recognise that base stations or nodes within the network which operate to give mobile users access to the network may be operable to compensate when one node enters a dormant mode. That compensation can ensure that network coverage is maintained over an area supported by a now dormant network access node as far as possible. Aspects and embodiments recognise that a solution which supports the requirements of energy saving and a related cell compensation mechanism which can be used by low power nodes may be of interest to many network operators.

Aspects recognise that small cell networks differ from macro cell networks in that they tend to be more time variable and ad hoc by their very nature. A small cell deployment, such as a femto cell deployment may vary as users turn on and off their femto, or move their small cell base station without reference to a mobile network operator, and hence may be substantially less planned than a macro deployment, which is typically directly controlled and laid out by a mobile network operator. A macro deployment may be such that a control node is always aware of the deployment and that deployment may remain static, meaning energy saving rules and appropriate compensation rules may also be substantially fixed or static. A time varying small cell deployment poses new issues when implementing energy saving techniques, if radio coverage is to be maintained as far as possible.

A small cell within a small cell network deployment may be designated to act as either an energy saving cell or a compensation cell. Some small cells may be operable to be both an energy saving cell and a compensation cell. An energy saving cell may be operable to turn off its radio transmission apparatus, thereby entering a dormant state to save energy, for example, if it is determined that the small cell is not in use by users, or in period of low overall network activity. A compensation cell may operate such that it compensates for other cells which have entered an energy saving mode. That is to say, a compensation cell may, for example, increase its transmit power to extend its radio coverage region to provide coverage in an area previously served by an energy saving cell.

The first aspect recognises that for each energy saving cell, there may be a plurality of other cells, or possible compensation cells within a deployment which can compensate for the absence of a region of radio coverage in the event that an energy saving cell enters a dormant state. The first aspect recognises that some cells may be more suited to compensate for an energy saving cell than others and that ranking those available cells may allow a control node to implement algorithms which allow for "smart" compensation for the energy saving cell by compensation cells.

In one embodiment, the small cell network comprises a time-varying deployment and the assigning occurs on addition or subtraction of a small cell to the deployment. Accordingly, as the form of the network deployment changes, the method of the first aspect may operate to track those changes and ensure that relationships between energy saving cells and compensation cells are maintained so that energy saving techniques may be successfully implemented as the deployment changes.

In one embodiment, the method comprises: periodically reassigning a compensation ranking to at least one other small cell in a determined small cell network deployment based on at least one operational characteristic indicative of an ability of the at least one other small cell to provide radio coverage in the region of radio coverage supported by the energy saving small cell. In some embodiments, the method may be periodically repeated, irrespective of whether it is determined a small cell is being added or subtracted to the deployment. Accordingly, changes to the deployment maybe compensated and allowed for to ensure successful implementation of energy saving techniques within the dynamic deployment.

In one embodiment, the method comprises: periodically reassigning a compensation ranking to the at least one other small cell for each energy saving small cell in the network deployment. Accordingly, appropriate compensation cells (at least one other cells) for each energy saving cell in a deployment may be continuously assessed and reassessed. That reassessment to ensure appropriate compensation mechanisms can be implemented if an energy saving cell enters a dormant mode can act to ensure the relevance of a compensation cells in a time varying deployment. The reassessment may occur in a time-offset manner for each energy saving cell within a network, thus spreading necessary messaging and processing in time.

In one embodiment, the method comprises: determining whether a first at least one other small cell having a highest assigned compensation ranking is active in the time varying deployment, and if not, triggering a further at least one other small cell to provide radio coverage in the region of radio coverage, based on the next highest assigned compensation ranking. Accordingly, if a most appropriate compensation cell is determined to be unavailable, a next most suitable candidate maybe triggered to act as a compensation cell for an energy saving cell. That is to say, the relative priority of a lesser cell may be increased if a primary compensation cell is determined to be unavailable.

In one embodiment, the method comprises: triggering a plurality of at least one other small cells, in order of their compensation ranking, until it is determined the region of radio coverage is adequately supported by the plurality of the at least one other small cell. Accordingly, more than one compensation cell may be triggered to compensate for a single energy saving cell which is determined to have entered a dormant state.

In one embodiment, the method comprises: maintaining, for each energy saving small cell, a set of at least one other small cell which can be configured to cover the region of radio coverage. Accordingly, for each energy saving cell a pool of appropriate compensation cells may be maintained, those cells representing cells which may be operable to offer coverage in the region previously supported by the energy saving cell.

In one embodiment, the set can have preselected size. In one embodiment, the number of small cells in the set may depend upon those required to ensure that coverage region can be covered. In one embodiment, the set may comprise immediate neighbour cells to the energy saving cell. Various selection criteria may be chosen, depending on intended operation of a deployment.

In one embodiment, the maintained set is ordered by compensation ranking. Accordingly, compensation cells may have a relative ranking or priority within a set of candidates for each energy saving cell in a deployment.

In one embodiment, the operational characteristic indicative of an ability of the at least one other small cell to provide radio coverage in the region of radio coverage supported by the energy saving small cell comprises one or more of: an indication of whether the at least one other small cell is configured to operate as a compensation cell; location of the at least one other small cell in said network deployment; an indication of maximum supportable transmit power of the at least one other small cell; an indication of user support capability of the at least one other small cell; an indication of user equipment utilisation of the at least one other small cell, and an indication of the at least one other small cell average uptime. It will be appreciated that each of these parameters may offer some indication of potential "usefulness" of a cell within a network to provide radio coverage in a region previously supported by an energy saving cell if it enters dormant mode.

In one embodiment, the method comprises: determining an energy saving associated with the energy saving cell entering the dormant state; determining an energy requirement associated with the at least one other small cell supporting radio coverage in the region of radio coverage; and triggering the at least one other small cell to enter compensation mode based on the compensation ranking and a comparison of the determined energy saving and the energy requirement for the at least one other small cell when said cell is in compensation mode. Accordingly, a control node may be operable to implement checks such that energy saving is implemented such that an actual saving of energy can be made. Since each small cell is typically autonomous in, for example, a user-deployed small cell deployment; a mechanism may be implemented by a control node which overrides such autonomous decisions if it is determined that an indication of energy to be used when compensating for an energy saving cell is greater than a potential energy saving associated with a cell switching to a dormant state.

In one embodiment, the method comprises: determining that the energy saving small cell has exited the dormant state; and, instructing the at least one other small cell providing radio coverage in the region of radio coverage, based on the assigned compensation ranking, to resume normal operation. Accordingly, a control node may operate to ensure that a cell does not compensate if that compensation is no longer required, thereby minimising energy wastage in a deployment, and minimising potential for interference within a network deployment.

A second aspect provides a computer program product operable, when executed on a computer, to perform the method of the first aspect.

A third aspect provides a network control node operable to implement energy saving in a small cell wireless telecommunication network deployment comprising at least one energy saving small cell switchable between: an active state in which it is configured to support a region of radio coverage; and a dormant state in which it does not support the region of radio coverage; the network control node comprising: assignment logic operable to assign a compensation ranking to at least one other small cell in a determined small cell network deployment based on at least one operational characteristic indicative of an ability of the at least one other small cell to provide radio coverage in the region of radio coverage supported by the energy saving small cell; dormant state logic operable to determine whether said energy saving small cell is in the dormant state; and, if so, to trigger at least one other small cell to provide radio coverage in the region of radio coverage, based on the assigned compensation ranking.

In one embodiment, the network control node comprises a small cell gateway. In one embodiment, the network control node comprises a master small cell in the small cell network deployment.

In one embodiment, the small cell network comprises a time-varying deployment and the assigning occurs on addition or subtraction of a small cell to the deployment.

In one embodiment, the assignment logic is operable to periodically reassign a compensation ranking to at least one other small cell in a determined small cell network deployment based on at least one operational characteristic indicative of an ability of the at least one other small cell to provide radio coverage in the region of radio coverage supported by the energy saving small cell.

In one embodiment, the assignment logic is operable to periodically reassign a compensation ranking to the at least one other small cell for each energy saving small cell in the network deployment.

In one embodiment, the control node comprises: determination logic operable to determine whether a first at least one other small cell having a highest assigned compensation ranking is active in the time varying deployment, and if not, said dormant state logic is operable to trigger a further at least one other small cell to provide radio coverage in the region of radio coverage, based on the next highest assigned compensation ranking.

In one embodiment, the network control node comprises dormant state logic operable to trigger a plurality of at least one other small cells, in order of their compensation ranking, until it is determined the region of radio coverage is adequately supported by the plurality of the at least one other small cells.

In one embodiment, the network control node further comprises: compensation list logic operable to maintain, for each energy saving small cell, a set of at least one other small cell which can be configured to cover the region of radio coverage.

In one embodiment, the set can have preselected size. In one embodiment, the number of small cells in the set may depend upon those required to ensure that coverage region can be covered. In one embodiment, the set may comprise immediate neighbour cells to the energy saving cell.

In one embodiment, the maintained set is ordered by compensation ranking.

In one embodiment, the operational characteristic indicative of an ability of the at least one other small cell to provide radio coverage in the region of radio coverage supported by the energy saving small cell comprises one or more of: an indication of whether the at least one other small cell is configured to operate as a compensation cell; location of the at least one other small cell in said network deployment; an indication of maximum supportable transmit power of the at least one other small cell; an indication of user support capability of the at least one other small cell; an indication of user equipment utilisation of the at least one other small cell, and an indication of the at least one other small cell average uptime.

In one embodiment, the network control node comprises: energy saving logic operable to determine an energy saving associated with the energy saving cell entering the dormant state; and an energy requirement associated with the at least one other small cell supporting radio coverage in the region of radio coverage; and said dormant state logic is operable to trigger the at least one other small cell based on the compensation ranking and a comparison of the determined energy saving and the energy requirement for the at least one other small cell.

In one embodiment, the dormant state logic is operable to determine that the energy saving small cell has exited the dormant state; and, instructing the at least one other small cell providing radio coverage in the region of radio coverage, based on the assigned compensation ranking, to resume normal operation.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments of the present invention will now be described further, with reference to the accompanying drawings, in which:
Figure 1 illustrates schematically macro network architecture and small cell architecture in an LTE network;
Figure 2 illustrates schematically energy saving and compensation cells in a network;
Figure 3 illustrates schematically one possible process by which an application might manage energy saving ranking lists for each energy saving femto cell in a femto cell network;
Figure 4 illustrates schematically an example process according to which a managing node application may periodically re-evaluate ranking lists associated with an energy saving cell;
Figure 5 is a flowchart which illustrates schematically a process according to which an application according to aspects and embodiments may trigger activation of compensation cells;
Figure 6 is a signalling diagram illustrating schematically a possible messaging sequence between femto cell base stations and a femto cell gateway according to one embodiment; and
Figure 7 is a signalling diagram illustrating schematically a messaging sequence between femto cells and a femto gateway according to a further embodiment.

### DESCRIPTION OF THE EMBODIMENTS

In, for example, a UMTS network architecture, user equipment roams through a wireless telecommunications system. Base stations are provided which support areas of radio coverage. A number of such base stations are provided and are distributed geographically in order to provide a wide area of coverage to user equipment. When user equipment is within an area served by a base station, communication may be established between the user equipment and the base station using associated radio links. Each base station typically supports a number of sectors within the geographical area of radio coverage.

Typically, different antenna within a base station support each associated sector. Each base station has multiple antennas. It will be appreciated that a large number of user equipment and a large number of base stations maybe present in a typical communication network. It will also be appreciated that different network architectures maybe implemented including, for example, a Long Term Evolution (LTE) network in which the functionality provided by network nodes described above can be provided by network nodes which can be named differently but have analogous functionality.

Traditional base stations provide coverage in relatively large geographical areas and those cells are often referred to as macro cells. It is possible to provide smaller cells within a network supported by small cell base stations, sometimes referred to as low power nodes. Those small cell base stations are typically provided within the radio coverage region provided by a macro base station. Such smaller sized cells are often referred to as micro cells, metro cells, pico cells or femto cells. One way to establish a small cell is to provide a small cell base station which provides coverage having a relatively limited range within the coverage area of a macro cell.

The transmission power of a small cell base station is relatively low and therefore each small cell typically provides a small radio service coverage area to user equipment compared to that provided by a macro base station. Typically, a small cell can be used to provide radio coverage in an office or a home.

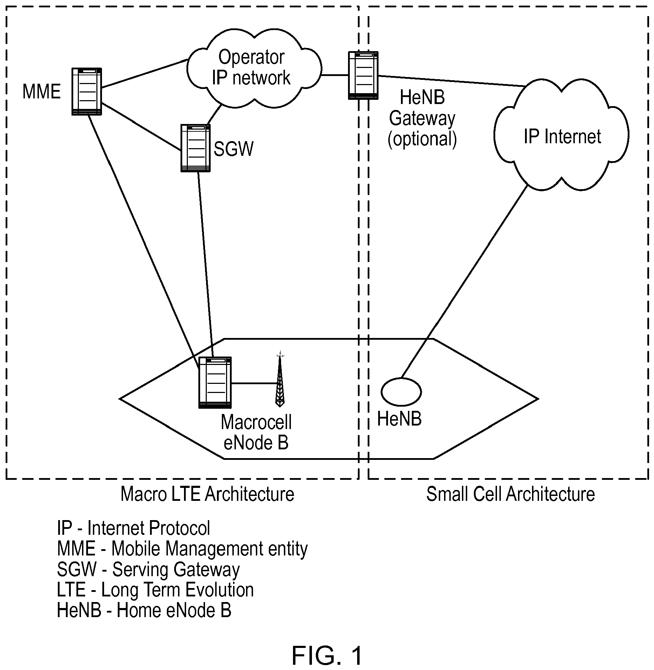

Figure 1 illustrates schematically macro network architecture and small cell architecture in an LTE network.

### Overview

Before discussing the embodiments in any more detail, first an overview will be provided.

Aspects and embodiments operate to introduce an application hosted on a node within a network (for example, an e-UTRAN or UTRAN), that application operable to coordinate energy saving mechanisms across low power nodes; for example, nodes supporting femto cells. An energy saving application in accordance with aspects and embodiments is operable to support the unique characteristics of femto cells which do not occur in macro cells - for example, the energy saving application maybe operable to recognise that low power nodes are often user deployed and can be located in places which are not predetermined or managed by an operator, and that femto cells may be arbitrarily switched off or on by a user at any given moment.

It would be recognised that in the case of macro cells supported by appropriate base stations, for example node Bs or e-node Bs, some of those network access nodes are likely to be designated as energy saving cells and others may be designated as compensation cells. In such a macro cell energy saving arrangement, energy saving macro cells may be configured to enter a dormant mode during low traffic periods in order to save energy. Compensation macro cells may be operable to support an energy saving macro cell entering dormant mode by themselves being operable to extend their coverage areas and capacity in order to cover the area supported by the macro cell which has entered dormant mode. The mechanism by which compensation cells are triggered to compensate for energy saving cells maybe OAM based and/or signalling based within the macro cell network. It will be appreciated that a macro cell network is typically static and highly managed by a network operator. Implementation of suitable energy saving mechanisms within a highly static network may therefore themselves be substantially static or fixed.

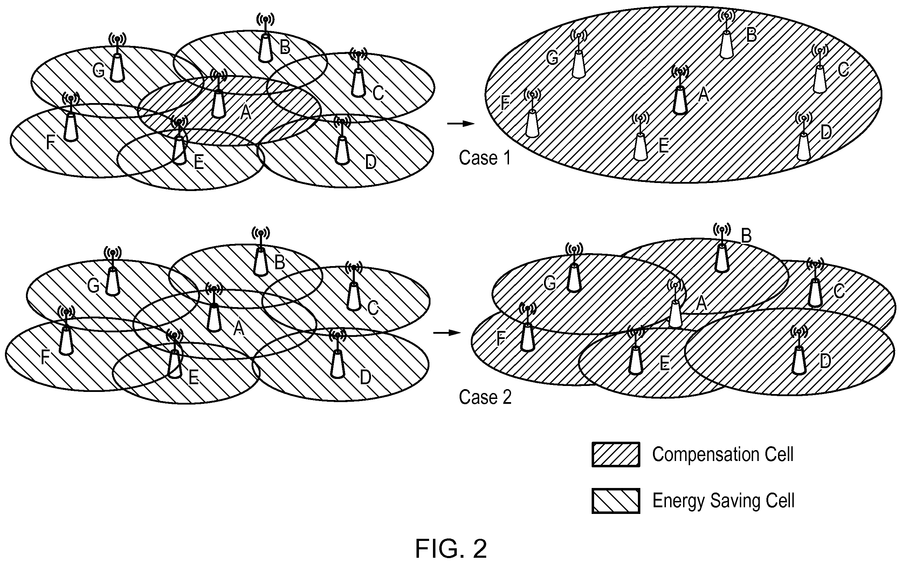

Figure 2 illustrates schematically energy saving and compensation cells in a network. In the example shown in Figure 2, there are provided seven base stations, each supporting their own region of radio coverage. In case 1 shown in Figure 2, base stations B to G may enter an energy saving mode and, as a result, base station A may extend its region of radio coverage such that it covers an area previously supported by base stations B to G. In case 2 shown in Figure 2, when base station A enters an energy saving mode, base stations B to G all act as compensation cells and extend their coverage regions to support radio coverage in the area previously supported by base station A.

A small cell designated to be a compensation cell is likely to be triggered to compensate for another cell if that cell has entered dormant mode to save energy, for example, during off-peak times, by implementing a system in which certain cells are known to be compensatory cells for other cells within a macro network. It is possible for a network operator to minimise coverage gaps within the network or minimise time periods where there might be a gap in wireless coverage provided by the macro cells.

Due to the dynamic deployment nature of femto cells and, in particular, the changeable nature of a femto cell network, static triggering of energy saving mechanisms in relation to energy saving femto cells and the associated compensation modes for compensation femto cells would be likely to be sub-optimal. That is to say, the nature of a femto cell network is significantly less static than that of a macro cell network and, thus, utilising an application within the e-UTRAN or UTRAN to coordinate and provide energy saving management of femto cells is likely to be more efficient and more aligned with femto cell requirements.

Femto cells are typically supported by low cost, low power base stations which are user deployed and thus are often not as resilient to failure as operator deployed macro cell base stations or even operator deployed low power nodes. Furthermore, it will be appreciated that femto cells are likely to be arbitrarily turned off or on by a user. Such a scenario may present an issue if a femto cell is operating as a compensation cell at the time that it fails or is turned off. Such a scenario can lead to an unexpected gap in network coverage area provided by a femto cell network.

Aspects and embodiments described recognise that it is possible to introduce a femto cell specific energy saving application which is operable to manage energy saving mechanisms within a femto cell network. Such a femto cell energy saving application may require introduction of a centralised managing node in femto cell network management structures which operates to host an appropriate application. It will be appreciated that the managing node may, for example, comprise a femto gateway or may, for example, be a specific energy saving network node provided within a femto network or, alternatively, a femto base station provided within a femto cell network may act as a master node with all others acting as slaves.

According to some embodiments, an application in accordance with aspects described may be hosted on a managing node and be operable to perform the task of selecting compensation femto cells for each energy saving femto cell. That selection process may, in some embodiments, occur by ranking femto cells in relation to how effective each would be in compensating for a given energy saving femto cell in the event that the energy saving femto cell entered energy saving or dormant mode. It will be appreciated that the selection and ranking process can be performed by the application for each energy saving femto cell operating within the managing node's area of responsibility. As a result, for each energy saving femto cell the application may maintain a list of ordered candidate compensation femto cells. The application maybe operable to use such a list to trigger compensation femto cells to compensate for an energy saving femto cell which enters a dormant mode. Similarly, the application may be operable to trigger the compensation femto cells to stop compensating when the energy saving femto cell exits its dormant mode.

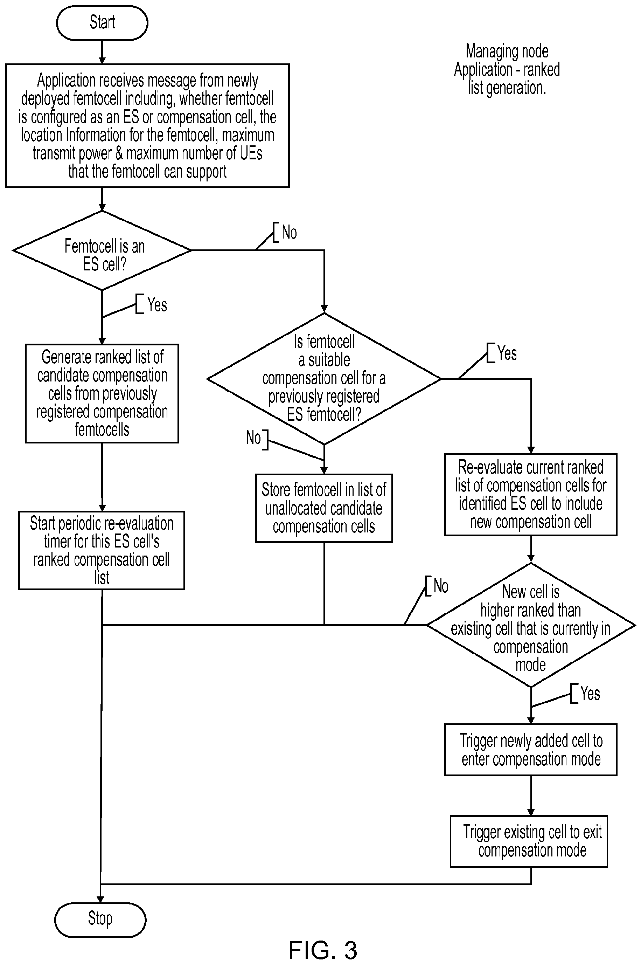

Figure 3 illustrates schematically one possible process by which an application might manage energy saving ranking lists for each energy saving femto cell in a femto cell network. As shown in Figure 3, according to some embodiments, a ranked list of compensation cells determined by the application on the managing node may operate such that those cells which can provide radio coverage over an area which would be covered by the energy saving femto cell in the event that the energy saving femto cell enters a dormant mode. The rank list of compensation cells may be compiled such that it identifies which cells are best able to fill the potential coverage gap of the energy saving femto cell and those cells which are best able to fill the coverage gap may be ranked higher in the list. It will be appreciated that the ranking can therefore be viewed as an indication of how effective or useful each compensation cell could be in compensating for a femto cell which was to enter a dormant mode. Furthermore, in some embodiments the list maintained by an application maybe such that it ranks other cells which could be used to fill a gap in coverage for an energy saving femto cell in the event that a higher ranked compensation cell is unavailable; for example, if it has been switched off.

In order to generate a rank list of compensation cells for each energy saving femto cell, a managing node application may be operable to use a range or variety of data known to it in relation to managed femto cells. For example, in some embodiments an initial data set can be provided to the application when each femto cell is deployed and switched on. In some embodiments for example, a femto cell may be operable to establish a connection with a managing node and can, as part of such a procedure, provide the managing node with information regarding, for example: whether the femto cell has been configured to be an energy saving cell or a compensation cell; information relating to a location of the femto cell in relation to other femto cells within the network; a maximum transmit power supportable by each femto cell; and/or a number of user equipment which a femto cell is configured to support. Such information can be added to other information available to a managing node application, including information which maybe available as a result of messages which are sent between femto cells and other nodes within a UTRAN/e-UTRAN.

In embodiments in which a managing node application is provided with an initial set of data regarding a newly deployed femto cell, the application may, for example, be operable to use information regarding whether a femto cell is designated as an energy saving or compensatory cell in order to determine operational parameters which may be applied in relation to that femto cell. If a femto cell is designated as a compensation cell, in some embodiments the application maybe operable to use the information provided by the femto cell to determine which existing energy saving femto cell the new compensation cell may be operable to compensate for. That is to say, in some embodiments the application may be operable to attempt to add the new femto cell to an existing rank list of compensation cells in relation to a relevant energy saving cell. If no existing list can be found which is suitable for the new compensation femto cell, that compensation femto cell may be added to a pool or list of unallocated candidate compensation femto cells.

If a femto cell is designated as an energy saving cell the application may be operable to generate, based on those compensation femto cells already known to it, a rank list of candidate compensation femto cells and the information provided to the managing node application from both those existing compensation femto cells and the new energy saving femto cell.

In some embodiments, whether a new femto cell is an energy saving femto cell or a compensation femto cell, the energy saving management application may be operable to firstly use provided location information to identify relative location of femto cells within the femto network. In particular, in some embodiments the application may be operable to identify which femto cells neighbour each other. Such a mode of operation may allow the application to generate an initial view of network topology and thus a cursory assessment regarding which femto cells could be candidate compensation cells for any neighbouring cells which have been designated to be energy saving cells.

In some embodiments, the application maybe operable to use the information provided by each femto cell regarding, for example, maximum transmit power supportable since this is related to the size of its potential coverage area; the number of user equipment which it is configured to support and similar factors since each has a bearing on whether a femto cell is likely to be a good candidate to compensate for an energy saving femto cell. It will be understood that, typically, the more power required to cover an area, the more power that is required for a compensation cell to cover the area of an energy saving femto cell, the less attractive that particular femto cell might be in relation to compensating for that specific energy saving femto cell. In some embodiments, the application may be operable to determine whether an energy saving cell entering a dormant state is more energy efficient than not entering an energy saving state, depending on the increase in transmit power required by compensation cells. It will be understood that the application may be operable to take into account the fact that a femto cell which is a close neighbour of an energy saving cell may only be operable to support a few user equipment and thus may not prove to be a good candidate to act as a compensation cell, since extending its coverage area over the area which would normally be supported by the energy saved cell may not actually allow any additional user equipment to access the network via that compensation femto cell. It will be appreciated that extra information regarding the configuration of each femto cell may allow the managing node application to implement and adjust a rank list of compensation femto cells appropriately. Furthermore, the operational parameters implemented by an application running on a managing node maybe configured such that different parameters may be applied in different femto cell network deployments.

In some embodiments, if an application detects that a new compensation cell has been deployed and also determines that the new compensation cell ought to be more highly ranked than a cell that is currently operating to compensate for an energy saving femto cell in a dormant mode, the application maybe operable to trigger the new compensation femto cell to immediately enter compensation mode and to trigger the lower ranked compensation femto cell to exit compensation mode.

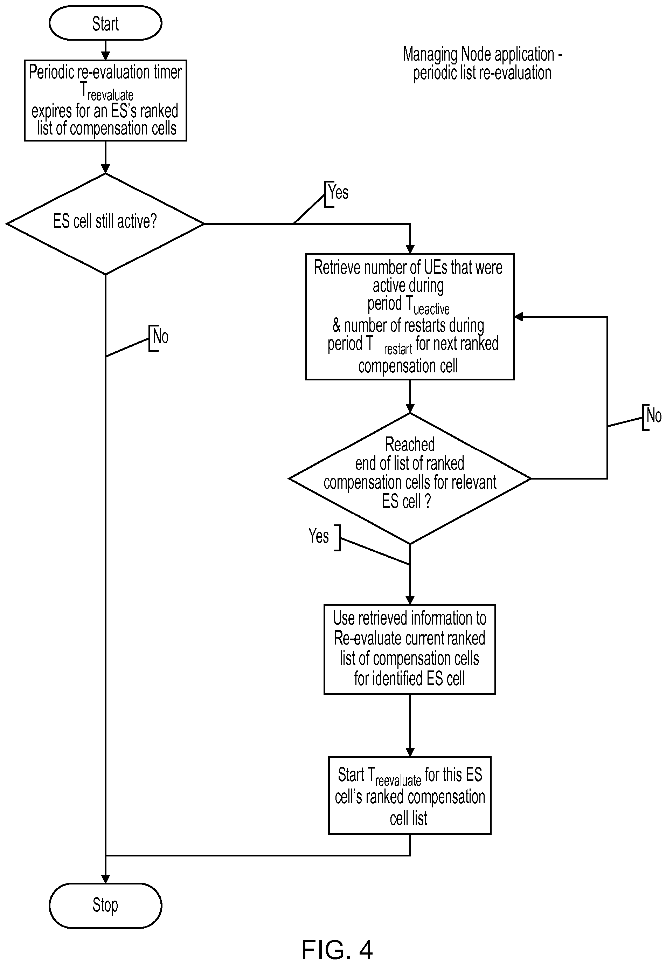

Figure 4 illustrates schematically an example process according to which a managing node application may periodically re-evaluate ranking lists associated with an energy saving cell. As shown in the flowchart of Figure 4, during normal network operation the managing node application may be operable to maintain data regarding: how many users are served by each compensation femto cell during a predetermined time period (T_{UEACTIVE}). That information may allow the application to dynamically adjust a ranked order of compensation cells for each energy saving femto cell. That adjustment may be based upon which femto cells have operated to serve the most, or least, traffic. It will be understood that it maybe a configurable implementation decision as to whether lightly loaded femto cells may be high ranked since they may statistically have spare capacity to compensate for an energy saving cell and may be operable to handle additional traffic, or whether those femto cells which are determined to be likely to have a higher load ought to be ranked more favourably, since traffic statistics indicate they are deployed in areas which require good coverage by virtue of the fact that more users attach themselves to those femto cells than others deployed nearby.

In some embodiments the application may be operable to track the frequency of each femto cell restart during a predefined period (T_{RESTART}), such that the application can determine whether to exclude certain compensation femto cells from compensating for a particular energy saving cell if it is likely that an energy saving cell is to be dormant for a potentially long period of time during which the chances that the relevant compensation cell will restart at a higher than a preselected threshold.

In order to limit processing load on a managing node running an application in accordance with aspects and embodiments described, dynamic readjustment of ranking list may be performed on a periodic basis. That periodic basis may be such that the application is operable to reassess ranked lists of cells with a frequency defined by a specified time interval, T_{RE-EVALUATE}. T_{RE-EVALUATE} may be a timer which is started at a different trigger time for each energy saving femto cell, such that the application load is spread. That is to say, the control node need not re-evaluate the list for all energy saving femto cells at the same time.

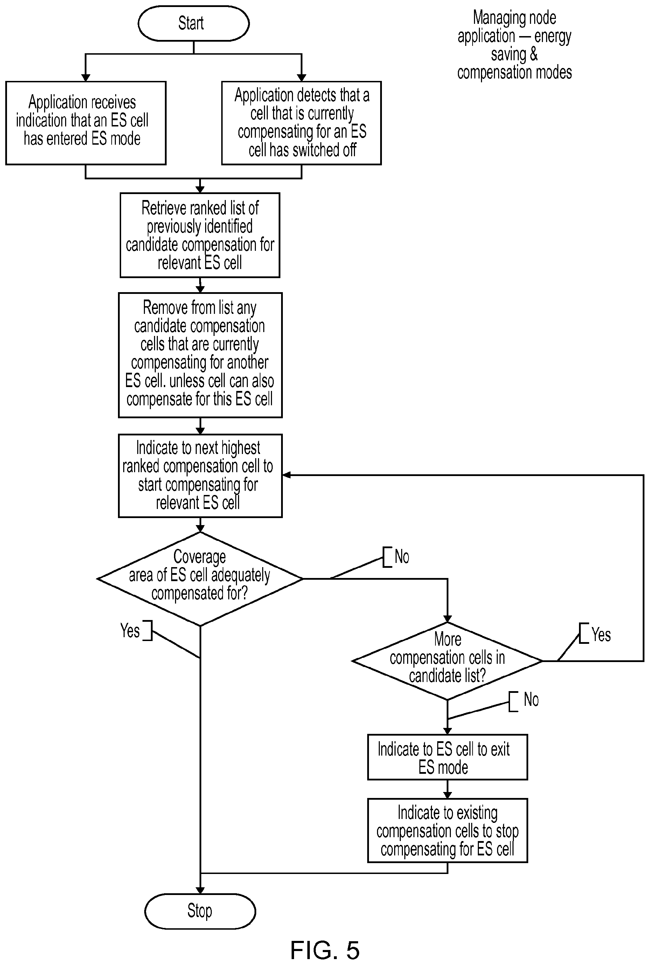

Figure 5 is a flowchart which illustrates schematically a process according to which an application according to aspects and embodiments may trigger activation of compensation cells. As shown in Figure 5, if a managing node application detects that a specific energy saving femto cell has entered dormant mode, it can be operable to use previously determined rank lists of compensation cells to determine which of those cells ought to be triggered to enter compensation mode to compensate for the dormant energy saving femto cell. Since femto cells are often densely deployed, any one femto cell may be a neighbour to more than one other femto cell and, thus, a femto cell may be a candidate compensation cell for more than one energy saving femto cell. That is to say, a compensation cell may appear on more than one rank list of compensation cells.

In some embodiments, the application may be operable to check whether a compensation cell is currently operable to compensate for another energy saving femto cell before triggering it to compensate for a new energy saving femto cell.

In some embodiments, if the application detects such a situation it can determine whether the cell that is currently compensating for a first energy saving femto cell is able to simultaneously compensate for a new energy saving femto cell. If not, the application may be operable to select another, lower ranked, compensation cell in relation to either the first or second energy saving femto cell which is in dormant mode. The application may be operable in some embodiments to iterate through a retrieved list of ranked compensation cells, triggering each to enter compensation mode until a threshold is met. That threshold may comprise a point at which the managing node determines that the coverage area of the energy saving femto cell is likely to have been adequately compensated for, or may comprise a simple number based compensation scheme whereby each energy saving femto cell has a fixed number of associated ranked compensatory cells.

In some embodiments, if there are insufficient compensation cells in the relevant rank list to adequately compensate for an energy saving femto cell's coverage area then there may be a gap in wireless coverage in the energy saving femto cell's normal coverage area.

In some embodiments, if the application determines that the likely gap in wireless coverage is significant it may be operable to trigger the energy saving femto cell such that the energy saving femto cell exits dormant mode. In such a scenario, it may trigger any compensation cell that had previously entered compensation mode in relation to that energy saving femto cell to exit that compensatory mode.

In some embodiments and some scenarios, the application may determine that the potential gap in network coverage is not significant and thus leave the energy saving femto cell in a dormant state. In some scenarios the compensation list for an energy saving femto cell may contain only one entry, should that compensation cell be capable of adequately compensating for an energy saving femto cell's complete coverage area.

Also as shown in Figure 5, if the application detects that a femto cell which is operating to compensate for an energy saving femto cell has failed or has been switched off, the application may be operable to trigger the next highest ranked compensation femto cell to enter compensation mode, provided again that the new candidate compensation cell is not already compensating for another energy saving femto cell. Similarly, if there are no femto cells left in the rank list that can replace the compensation cell that has failed or been switched off, the application may, according to some embodiments, decide to awake the energy saving femto cell from its dormant state and inform any compensation cells which are operating to compensate for that energy saving femto cell to exit compensation mode.

According to further aspects and embodiments, if a managing node application determines from information about the location of deployed femtocells that a newly deployed femto cell could advantageously be a compensation cell rather than an energy saving cell, it maybe operable to override the configuration of that femto cell and inform the femto cell accordingly. Such an implementation might be of particular use in circumstances where the application determines that all femto cells neighbouring a particular femto cell have been designated as energy saving cells and, thus, there are no available compensation cells to compensate for those energy saving femto cells in the event that they wish to enter a dormant state. It will be appreciated that such a scenario, left unresolved by the application, could lead to a situation in which all neighbouring energy saving femto cells entered a dormant mode at the same time, potentially leading to a large coverage hole within the femto network.

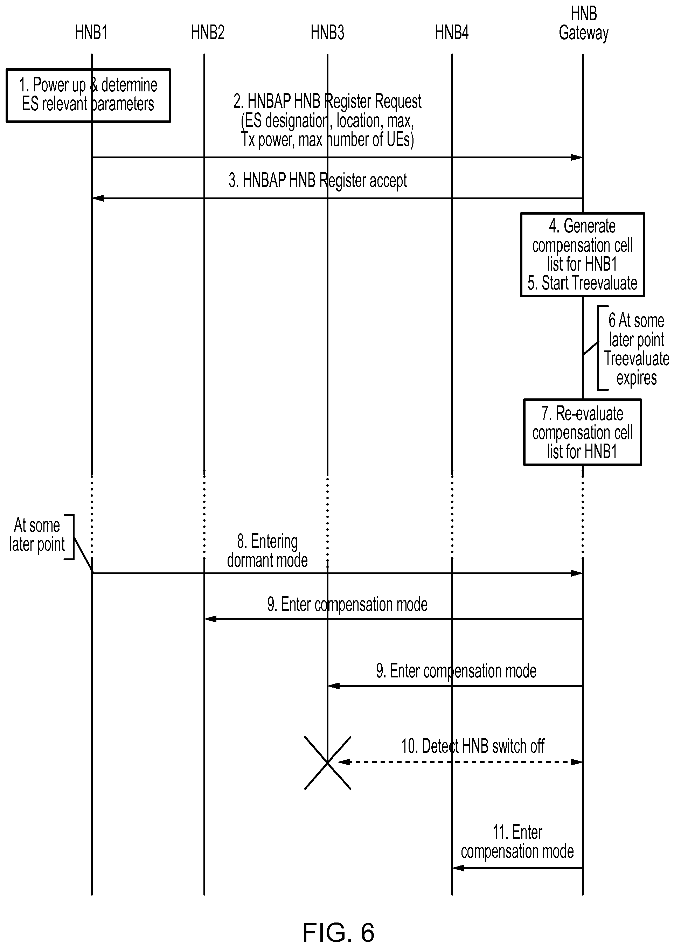

Figure 6 is a signalling diagram illustrating schematically a possible messaging sequence between femto cell base stations and a femto cell gateway according to one embodiment. In the example shown in Figure 6, a femto cell gateway (HNB-GW) is deployed in a UMTS femto cell network. In this embodiment, an energy saving application is hosted on the femto cell gateway which acts as the managing node. According to the illustrated example, the following steps may occur:
1. A femto cell (HNB1) is deployed by an end user. It boots, determines its location, its energy saving designation (in this example, it is an energy saving cell), its maximum transmit power and the maximum number of users it maybe operable to support.
2. After those relevant parameters are determined at step 2, HNB1 provides that information to the femto gateway HNB-GW via an HNBAP HNB registration message.
3. HNB-GW is operable to respond to the registration request from HNB1
4. The femto cell energy saving application on the femto gateway is operable to generate a rank list of candidate compensation cells in relation to HNB1. In this example, the application selects HNB2, HNB3 and HNB4 which were previously registered with the femto gateway, HNB-GW.
5. HNB-GW is operable to start periodic list re-evaluation timer T_{RE-EVALUATE} in relation to HNB1.
6. At some point later, T_{RE-EVALUATE} expires.
7. HNB-GW may be operable to use information about the number of users served by HNB2, HNB3 and HNB4 during the period T_{UEACTIVE}, together with the number of times HNB2, HNB3 and HNB4 restarted during period T_{RESTART} when re-evaluating the ranked list. When re-evaluating the ranked list in relation to HNB1, the application may be operable to determine that HNB2 and HNB3 can provide adequate coverage for HNB1 if HNB1 were to enter a dormant mode.
8. At a further later point, HNB-GW may receive an indication from HNB1 that it is entering a dormant mode.
9. The HNB-GW is operable to retrieve the list of compensation cells maintained in relation to HNB1. In this example, those compensation cells comprise HNB2, HNB3 and HNB4. The application running on the gateway is then operable to trigger HNB2 and HNB3 to enter compensation mode, since those two compensation cells have been identified as suitable candidates to provide coverage in the area normally served by HNB1.
10. At a further later point, HNB3 may be switched off and that switching off can be detected by HNB-GW.
11. HNB-GW maybe operable to determine that HNB4 can replace HNB3 as a compensation cell, and therefore triggers HNB4 to enter compensation mode.

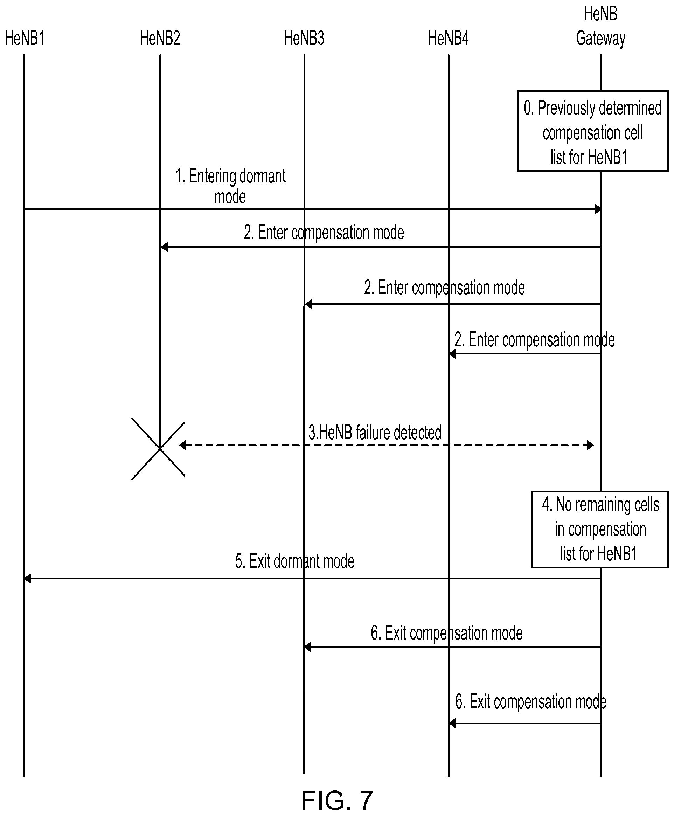

Figure 7 is a signalling diagram illustrating schematically a messaging sequence between femto cells and a femto gateway according to a further embodiment. In the example shown schematically in Figure 7, a femto gateway (HeNB-GW) is deployed in an LTE femto cell network and the energy saving application is hosted on the HeNB-GW to act as a managing node. The HeNB-GW may have previously determined a rank list of compensation cells (HeNB2, HeNB3 and HeNB4) in relation to the energy saving cell HeNB1. In the example shown, those compensation cells may be operable to currently be compensating for HeNB1 which is operating in an energy saving mode. As shown in Figure 7, the following steps occur:
1. HeNB1 indicates to HeNB-GW that it is entering dormant mode.
2. HeNB-GW triggers HeNB2, HeNB3 and HeNB4 to enter compensation mode to compensate for HeNB1.
3. HeNB2 fails and the failure is detected by HeNB-GW.
4. HeNB-GW determines that there are no more compensation cells in the rank list maintained in relation to HeNB1 and, thus, that no adequate coverage for HeNB1 may be provided.
5. HeNB-GW is operable to trigger HeNB1 to exit energy saving mode.
6. HeNB-GW is operable to trigger HeNB3 and HeNB4 to exit compensation mode.

Aspects and embodiments provide a means by which a node can manage energy saving modes which may be implemented by femto cells. Aspects and embodiments may support a mechanism to determine which femto cells can compensate for a femto cell which enters an energy saving mode. The determination can be dynamically modified to reflect a dynamic nature of femto cells deployed in random locations by end users and which are subject to being arbitrarily switched off or on by end users.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A method of implementing energy saving in a small cell wireless telecommunication network deployment comprising at least one energy saving small cell (HNB1) switchable between:
an active state in which it is configured to support a region of radio coverage and
a dormant state in which it does not support said region of radio coverage;
said method comprising:
assigning a compensation ranking to at least one other small cell (HNB2, HNB3, HNB4) in a determined small cell network deployment based on at least one operational characteristic indicative of an ability of said at least one other small cell (HNB2, HNB3, HNB4) to provide radio coverage in said region of radio coverage supported by said energy saving small cell (HNB1);
determining whether said energy saving small cell (HNB1) is in said dormant state; and, if so,
triggering at least one other small cell (HNB2, HNB3, HNB4) to provide radio coverage in said region of radio coverage, based on said assigned compensation ranking.

2. A method according to claim 1, wherein said small cell network comprises a time-varying deployment and said assigning occurs on addition or subtraction of a small cell to said deployment.

3. A method according to claim 1 or claim 2, comprising: periodically reassigning a compensation ranking to at least one other small cell (HNB2, HNB3, HNB4) in a determined small cell network deployment based on at least one operational characteristic indicative of an ability of said at least one other small cell (HNB2, HNB3, HNB4) to provide radio coverage in said region of radio coverage supported by said energy saving small cell (HNB1).

4. A method according to any preceding claim, comprising: periodically reassigning a compensation ranking to said at least one other small cell (HNB2, HNB3, HNB4) for each energy saving small cell in said network deployment.

5. A method according to any preceding claim, comprising: determining whether a first said at least one other small cell (HNB2, HNB3, HNB4) having a highest assigned compensation ranking is active in said time varying deployment, and if not, triggering a further at least one other small cell (HNB2, HNB3, HNB4) to provide radio coverage in said region of radio coverage, based on said next highest assigned compensation ranking.

6. A method according to any preceding claim, comprising: triggering a plurality of said at least one other small cells (HNB2, HNB3, HNB4), in order of their compensation ranking, until it is determined said region of radio coverage is adequately supported by said plurality of said at least one other small cells (HNB2, HNB3, HNB4).

7. A method according to any preceding claim, comprising: maintaining, for each energy saving small cell (HNB1), a set of said at least one other small cell (HNB2, HNB3, HNB4) which can be configured to cover said region of radio coverage.

8. A method according to claim 7, wherein said set comprises: neighbour cells of said energy saving cell (HNB1).

9. A method according to claim 7 or claim 8, wherein said set comprises: a preselected number of said other cells for each energy saving cell (HNB1).

10. A method according to any one of claims 7 to 9, wherein said set is ordered by compensation ranking.

11. A method according to any preceding claim, wherein said operational characteristic indicative of an ability of said at least one other small cell (HNB2, HNB3, HNB4) to provide radio coverage in said region of radio coverage supported by said energy saving small cell (HNB1) comprises one or more of: an indication of whether said small cell is configured to operate as a compensation cell; location of said small cell in said network deployment; an indication of maximum supportable transmit power of said small cell; an indication of user support capability; an indication of user equipment utilisation of said small cell, and an indication of said small cell average uptime.

12. A method according to any preceding claim, comprising: determining an energy saving associated with said energy saving cell (HNB1)entering said dormant state; determining an energy requirement associated with said at least one other small cell (HNB2, HNB3, HNB4) supporting radio coverage in said region of radio coverage; and triggering said at least one other small cell (HNB2, HNB3, HNB4) based on said compensation ranking and a comparison of said determined energy saving and said energy requirement for said at least one other small cell.

13. A method according to any preceding claim, comprising: determining that said energy saving small cell (HNB1) has exited said dormant state; and, instructing said at least one other small cell (HNB2, HNB3, HNB4) providing radio coverage in said region of radio coverage, based on said assigned compensation ranking, to resume normal operation.

14. A computer program product operable, when executed on a computer, to perform the method of any one of claims 1 to 13.

15. A network control node (HeNB-GW) operable to implement energy saving in a small cell wireless telecommunication network deployment comprising at least one energy saving small cell (HNB1) switchable between:
an active state in which it is configured to support a region of radio coverage and
a dormant state in which it does not support said region of radio coverage;
said network control node comprising:
assignment logic operable to assign a compensation ranking to at least one other small cell (HNB2, HNB3, HNB4) in a determined small cell network deployment based on at least one operational characteristic indicative of an ability of said at least one other small cell (HNB2, HNB3, HNB4) to provide radio coverage in said region of radio coverage supported by said energy saving small cell (HNB1);
dormant state logic operable to determine whether said energy saving small cell (HNB1) is in said dormant state; and, if so, to trigger at least one other small cell (HNB2, HNB3, HNB24) to provide radio coverage in said region of radio coverage, based on said assigned compensation ranking.

## Patentansprüche

1. Verfahren zum Implementieren von Energieeinsparungen in einer Bereitstellung eines drahtlosen Kleinzellentelekommunikationsnetzes, welches mindestens eine energiesparende Kleinzelle (HNB₁) umfasst, die umschaltbar ist zwischen:
einem aktiven Zustand, in welchem sie dafür konfiguriert ist, einen Funkabdeckungsbereich zu unterstützen, und einem inaktiven Zustand, in welchem sie besagten Funkabdeckungsbereich nicht unterstützt; wobei besagtes Verfahren umfasst:
das Zuweisen eines Kompensationsrankings zu mindestens einer weiteren Kleinzelle (HNB₂, HNB₃, HNB₄) in einer bestimmten Kleinzellennetzbereitstellung auf der Grundlage von mindestens einer Betriebseigenschaft, die eine Fähigkeit der besagten, mindestens einen weiteren Kleinzelle (HNB₂, HNB₃, HNB₄) zum Bereitstellen von Funkabdeckung in besagtem Funkabdeckungsbereich anzeigt, der von der besagten, energiesparenden Kleinzelle (HNB₁) unterstützt wird;
das Bestimmen, ob die besagte, energiesparende Kleinzelle (HNB₁) in besagtem inaktivem Zustand ist, und wenn dem so ist,
das Auslösen mindestens einer weiteren Kleinzelle (HNB₂, HNB₃, HNB₄), damit sie auf der Grundlage des besagten, zugewiesenen Kompensationsrankings Funkabdeckung in besagtem Funkabdeckungsbereich bereitstellt.

2. Verfahren nach Anspruch 1, wobei besagtes Kleinzellennetz eine zeitabhängige Bereitstellung umfasst und wobei besagtes Zuweisen auf die Hinzunahme oder die Herausnahme einer Kleinzelle aus besagter Bereitstellung erfolgt.

3. Verfahren nach Anspruch 1 oder 2, umfassend: das periodische Neuzuweisen eines Kompensationsrankings zu mindestens einer weiteren Kleinzelle (HNB₂, HNB₃, HNB₄) in einer bestimmten Kleinzellennetzbereitstellung auf der Grundlage von mindestens einer Betriebseigenschaft, die eine Fähigkeit der besagten, mindestens einen weiteren Kleinzelle (HNB₂, HNB₃, HNB₄) zum Bereitstellen von Funkabdeckung in besagtem Funkabdeckungsbereich anzeigt, der von der besagten, energiesparenden Kleinzelle (HNB₁) unterstützt wird.

4. Verfahren nach einem jeglichen der vorgenannten Ansprüche, umfassend: das periodische Neuzuweisen eines Kompensationsrankings an die besagte, mindestens eine weitere Kleinzelle (HNB₂, HNB₃, HNB₄) für jede energiesparende Kleinzelle in besagter Netzwerkbereitstellung.

5. Verfahren nach einem jeglichen der vorgenannten Ansprüche, umfassend: das Bestimmen, ob eine erste der besagten, mindestens einen weiteren Kleinzelle (HNB₂, HNB₃, HNB₄) mit einem höchsten zugewiesenen Kompensationsranking in der besagten, zeitabhängigen Bereitstellung aktiv ist, und wenn nicht, das Auslösen mindestens einer weiteren Kleinzelle (HNB₂, HNB₃, HNB₄) auf der Grundlage des besagten, nächsthöheren Kompensationsrankings, um Funkabdeckung in besagtem Funkabdeckungsbereich bereitzustellen.

6. Verfahren nach einem jeglichen der vorgenannten Ansprüche, umfassend: das Auslösen einer Vielzahl der besagten, mindestens einen oder mehreren, weiteren Kleinzellen (HNB₂, HNB₃, HNB₄) in der Reihenfolge ihres Kompensationsrankings, bis bestimmt wird, dass besagter Funkabdeckungsbereich von besagter Vielzahl der besagten, mindestens einen oder mehreren, weiteren Kleinzellen (HNB₂, HNB₃, HNB₄) angemessen abgedeckt ist.

7. Verfahren nach einem jeglichen der vorgenannten Ansprüche, umfassend: für jede energiesparende Kleinzelle (HNB₁) das Unterhalten eines Satzes der besagten, mindestens einen oder mehreren Kleinzellen (HNB₂, HNB₃, HNB₄), der so konfiguriert werden kann, dass er besagte Funkabdeckungsbereich abdeckt.

8. Verfahren nach Anspruch 7, wobei besagter Satz umfasst: Nachbarzellen der besagten, energiesparenden Kleinzelle (HNB₁).

9. Verfahren nach Anspruch 7 oder 8, wobei besagter Satz umfasst: eine vorausgewählte Anzahl der besagten weiteren Zellen für jede energiesparende Kleinzelle (HNB₁).

10. Verfahren nach einem beliebigen der Ansprüche 7 bis 9, wobei besagter Satz nach einem Kompensationsranking geordnet ist.

11. Verfahren nach einem jeglichen der vorgenannten Ansprüche, wobei besagte Betriebseigenschaft, die eine Fähigkeit der besagten, mindestens einen weiteren Kleinzelle (HNB₂, HNB₃, HNB₄) zur Bereitstellung von Funkabdeckung in besagtem Funkabdeckungsbereich anzeigt, der von der besagten, energiesparenden Kleinzelle (HNB₁) unterstützt wird, eines oder mehrere der folgenden Elemente umfasst: eine Indikation, ob besagte Kleinzelle dafür konfiguriert, um als Kompensationszelle betrieben zu werden; die Position besagter Kleinzelle in besagter Netzwerkbereitstellung; eine Indikation der maximal verarbeitbaren Übertragungsleistung der besagten Kleinzelle; eine Indikation des verfügbaren Leistungsvermögens zur Unterstützung von Benutzern; eine Indikation der Benutzung besagter Kleinzelle durch Benutzergeräte; und eine Indikation der durchschnittlichen Verfügbarkeit der besagten Kleinzelle.

12. Verfahren nach einem jeglichen der vorgenannten Ansprüche, umfassend: das Bestimmen einer mit der besagten, energiesparenden Kleinzelle (HNB₁), die in den Inaktivzustand tritt, assoziierten Energieeinsparung; das Bestimmen eines Energiebedarfs, der mit der besagten, mindestens einen weiteren Kleinzelle (HNB₂, HNB₃, HNB₄) assoziiert ist, welche in besagtem Funkabdeckungsbereich Funkabdeckung unterstützt; und das Auslösen der besagten, mindestens einen weiteren Kleinzelle (HNB₂, HNB₃, HNB₄) auf der Grundlage besagten Kompensationsrankings und eines Vergleichs der besagten, bestimmten Energieeinsparung und des besagten Energiebedarfs für die besagte, mindestens eine weitere Kleinzelle.

13. Verfahren nach einem jeglichen der vorgenannten Ansprüche, umfassend: das Bestimmen, dass die besagte, energiesparende Kleinzelle (HNB₁) den besagten Inaktivzustand verlassen hat; und das auf der Grundlage des besagten, zugewiesenen Kompensationsrankings erfolgende Anweisen der besagten, mindestens einen weiteren Kleinzelle (HNB₂, HNB₃, HNB₄), die Funkabdeckung in besagtem Funkabdeckungsbereich zur Verfügung stellt, wieder zum normalen Betrieb überzugehen.

14. Computerprogramm-Produkt, betreibbar für das Durchführen des Verfahrens nach einem jeglichen der Ansprüche 1 bis 13, wenn es auf einem Computer ausgeführt wird.

15. Netzsteuerungsknoten (HeNB-GW), betriebsbereit für das Implementieren von Energieeinsparungen in einer Bereitstellung eines drahtlosen Kleinzellentelekommunikationsnetzes, welches mindestens eine energiesparende Kleinzelle (HNB₁) umfasst, die umschaltbar ist zwischen:
einem aktiven Zustand, in welchem sie dafür konfiguriert ist, einen Funkabdeckungsbereich zu unterstützen, und einem inaktiven Zustand, in welchem sie besagten Funkabdeckungsbereich nicht unterstützt; wobei besagter Netzsteuerungsknoten umfasst:
Eine Zuweisunslogik, die ausgelegt ist für das Zuweisen eines Kompensationsrankings zu mindestens einer weiteren Kleinzelle (HNB₂, HNB₃, HNB₄) in einer bestimmten Kleinzellennetzbereitstellung auf der Grundlage von mindestens einer Betriebseigenschaft, die eine Fähigkeit der besagten, mindestens einen weiteren Kleinzelle (HNB₂, HNB₃, HNB₄) zum Bereitstellen von Funkabdeckung in besagtem Funkabdeckungsbereich anzeigt, der von der besagten, energiesparenden Kleinzelle (HNB₁) unterstützt wird;
Inaktivzustandslogik, die ausgelegt ist für das Bestimmen, ob die besagte, energiesparende Kleinzelle (HNB₁) sich in dem besagten Inaktivzustand befindet; und die, wenn dem so ist, dafür ausgelegt ist, um auf der Grundlage des besagten, zugewiesenen Kompensationsrankings die besagte, mindestens eine weitere Kleinzelle (HNB₂, HNB₃, HNB₄) auszulösen, die Funkabdeckung in besagtem Funkabdeckungsbereich zur Verfügung stellt.

## Revendications

1. Procédé de mise en oeuvre d'économie d'énergie dans un déploiement de réseau de télécommunications sans fil à petites cellules comprenant au moins une petite cellule d'économie d'énergie (HNB₁) commutable entre :
un état actif dans lequel elle est configurée pour prendre en charge une zone de couverture radio et un état dormant dans lequel elle ne prend pas en charge ladite zone de couverture radio ;
ledit procédé comprenant les étapes suivantes :
attribuer un rang de compensation à au moins une autre petite cellule (HNB₂, HNB₃, HNB₄) dans un déploiement de réseau à petites cellules déterminé en fonction d'au moins une caractéristique de fonctionnement indiquant une capacité de ladite au moins une autre petite cellule (HNB₂, HNB₃, HNB₄) à fournir une couverture radio dans ladite zone de couverture radio prise en charge par ladite petite cellule d'économie d'énergie (HNB₁) ;
déterminer si ladite petite cellule d'économie d'énergie (HNB₁) est dans ledit état dormant ; et, si c'est le cas,
commander à au moins une autre petite cellule (HNB₂, HNB₃, HNB₄) de fournir une couverture radio dans ladite zone de couverture radio, en fonction dudit rang de compensation attribué.

2. Procédé selon la revendication 1, dans lequel ledit réseau à petites cellules comprend un déploiement variable dans le temps et ladite attribution intervient lors de l'ajout ou du retrait d'une petite cellule audit déploiement.

3. Procédé selon la revendication 1 ou 2, comprenant l'étape suivante : réattribuer périodiquement un rang de compensation à au moins une autre petite cellule (HNB₂, HNB₃, HNB₄) dans un déploiement de réseau à petites cellules déterminé en fonction d'au moins une caractéristique de fonctionnement indiquant une capacité de ladite au moins une autre petite cellule (HNB₂, HNB₃, HNB₄) à fournir une couverture radio dans ladite zone de couverture radio prise en charge par ladite petite cellule d'économie d'énergie (HNB₁).

4. Procédé selon l'une quelconque des revendications précédentes, comprenant l'étape suivante : réattribuer périodiquement un rang de compensation à ladite au moins une autre petite cellule (HNB₂, HNB₃, HNB₄) pour chaque petite cellule d'économie d'énergie dans ledit déploiement de réseau.

5. Procédé selon l'une quelconque des revendications précédentes, comprenant l'étape suivante : déterminer si une première cellule desdites au moins une autre petite cellule (HNB₂, HNB₃, HNB₄) ayant le rang de compensation attribué le plus élevé est active dans ledit déploiement variable dans le temps, et si ce n'est pas le cas, commander à une autre parmi l'au moins une autre petite cellule (HNB₂, HNB₃, HNB₄) de fournir la couverture radio dans ladite zone de couverture radio, en fonction dudit rang de compensation attribué le plus élevé suivant.

6. Procédé selon l'une quelconque des revendications précédentes, comprenant l'étape suivante : commander une pluralité desdites au moins une autre petite cellule (HNB₂, HNB₃, HNB₄), dans l'ordre de leur rang de compensation, jusqu'à ce qu'il soit déterminé que ladite zone de couverture radio est prise en charge de façon adéquate par ladite pluralité de ladite au moins une autre petite cellule (HNB₂, HNB₃, HNB₄).

7. Procédé selon l'une quelconque des revendications précédentes, comprenant l'étape suivante : maintenir, pour chaque petite cellule d'économie d'énergie (HBN₁), un ensemble desdites au moins une autre petite cellule (HNB₂, HNB₃, HNB₄) qui peuvent être configurées pour couvrir ladite zone de couverture radio.

8. Procédé selon la revendication 7, dans lequel ledit ensemble comprend : des cellules voisines de ladite cellule d'économie d'énergie (HBN₁).

9. Procédé selon la revendication 7 ou 8, dans lequel ledit ensemble comprend : un nombre présélectionné desdites autres cellules pour chaque cellule d'économie d'énergie (HBN₁).

10. Procédé selon l'une quelconque des revendications 7 à 9, dans lequel ledit ensemble est classé par rang de compensation.

11. Procédé selon l'une quelconque des revendications précédentes, dans lequel lesdites caractéristiques de fonctionnement indiquant une capacité desdites au moins une autre petite cellule (HNB₂, HNB₃, HNB₄) à fournir une couverture radio dans ladite zone de couverture radio prise en charge par ladite petite cellule d'économie d'énergie (HBN₁) comprennent un ou plusieurs des éléments suivants : une indication précisant si ladite petite cellule est configurée pour fonctionner en tant que cellule de compensation ; la localisation de ladite petite cellule dans ledit déploiement de réseau ; une indication de la puissance de transmission maximale admissible de ladite petite cellule ; une indication de la capacité de prise en charge d'utilisateur ; une indication de l'utilisation d'équipement utilisateur de ladite petite cellule, et une indication de la durée de disponibilité moyenne de ladite petite cellule.

12. Procédé selon l'une quelconque des revendications précédentes, comprenant les étapes suivantes : déterminer une économie d'énergie associée au passage à l'état dormant de ladite cellule d'économie d'énergie (HBN₁) ; déterminer un besoin d'énergie associé à la prise en charge par ladite au moins une autre petite cellule (HNB₂, HNB₃, HNB₄) de la couverture radio dans ladite zone de couverture radio ; et commander lesdites au moins une autre petite cellule (HNB₂, HNB₃, HNB₄) en fonction dudit rang de compensation et d'une comparaison de ladite économie d'énergie déterminée et dudit besoin d'énergie de ladite au moins une autre petite cellule.

13. Procédé selon l'une quelconque des revendications précédentes, comprenant les étapes suivantes : déterminer que ladite petite cellule d'économie d'énergie (HBN₁) est sortie de l'état dormant ; et, donner l'instruction auxdites au moins une autre petite cellule (HNB₂, HNB₃, HNB₄) fournissant une couverture radio dans ladite zone de couverture radio, en fonction dudit rang de compensation attribué, de revenir à un fonctionnement normal.

14. Produit-programme informatique permettant, lorsqu'il est exécuté sur un ordinateur, de réaliser le procédé selon l'une quelconque des revendications 1 à 13.

15. Noeud de commande de réseau (HeNB-GW) permettant la mise en oeuvre d'économie d'énergie dans un déploiement de réseau de télécommunications sans fil à petites cellules comprenant au moins une petite cellule d'économie d'énergie (HNB₁) commutable entre :
un état actif dans lequel elle est configurée pour prendre en charge une zone de couverture radio et un état dormant dans lequel elle ne prend pas en charge ladite zone de couverture radio ;
ledit noeud de commande de réseau camprenant :
une logique d'attribution permettant d'attribuer un rang de compensation à au moins une autre petite cellule (HNB₂, HNB₃, HNB₄) dans un déploiement de réseau à petites cellules déterminé en fonction d'au moins une caractéristique de fonctionnement indiquant une capacité de ladite au moins une autre petite cellule (HNB₂, HNB₃, HNB₄) à fournir une couverture radio dans ladite zone de couverture radio prise en charge par ladite petite cellule d'économie d'énergie (HNB₁) ;
une logique d'état dormant permettant de déterminer si ladite petite cellule d'économie d'énergie (HNB₁) est dans ledit état dormant ; et, si c'est le cas, de commander à au moins une autre petite cellule (HNB₂, HNB₃, HNB₄) de fournir une couverture radio dans ladite zone de couverture radio, en fonction dudit rang de compensation attribué.
